(19) Europäisches Patentamt
European Patent Office
Office européen des brevets

(11) **EP 4 571 607 A1**

(12) **EUROPEAN PATENT APPLICATION**

(43) Date of publication:
**18.06.2025 Bulletin 2025/25**

(21) Application number: **24213469.0**

(22) Date of filing: **18.11.2024**

(51) International Patent Classification (IPC):
**G06Q 10/04** (2023.01)   **G06Q 50/06** (2024.01)
**H02J 3/00** (2006.01)

(52) Cooperative Patent Classification (CPC):
**H02J 3/003; G06Q 10/04; G06Q 50/06; H02J 3/008**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.12.2023 IN 202321084876**

(71) Applicant: **Tata Consultancy Services Limited
Maharashtra (IN)**

(72) Inventors:
• **GUPTA, SHRAYASH**
  **411057 Pune, Maharashtra (IN)**
• **VELAYUDHAN KUMAR, MOHAN RAJ**
  **600113 Chennai, Tamil Nadu (IN)**
• **BICHPURIYA, YOGESH KUMAR**
  **411057 Pune, Maharashtra (IN)**
• **SARANGAN, VENKATESH**
  **600113 Chennai, Tamil Nadu (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR COMPUTING OPTIMAL ENERGY GENERATION SCHEDULE IN MULTI-ENERGY HUBS**

(57)    Power systems mainly focuses on uncertainties such as load variations, renewable energy sources, electricity price variability etc., but a gap exists in formulating and solving Portfolio Optimization (PO) problem considering inter multi-energy market price vulnerabilities. The present disclosure receives an energy volume generated by a plurality of energy generation systems. Further, a current market price value is predicted and an expected revenue for each of the plurality of energy generation systems is computed. Simultaneously, an energy generation cost, an energy conversion cost is computed, and an energy storage cost are computed. Further, a market price variation risk associated with each of the plurality of multi-energy day-ahead markets is computed. Further, a market price risk forecast is computed. Finally, an optimal energy generation schedule is computed for each of the plurality of energy generation systems in a plurality of time window associated with a day using a portfolio optimization technique.

FIG. 1B

EP 4 571 607 A1

**Description**

CROSS-REFERENCE TO RELATED APPLICATIONS AND PRIORITY

The present application claims priority to Indian application no. 202321084876, filed on December 12, 2023.

TECHNICAL FIELD

The disclosure herein generally relates to the field of energy system and, more particularly, to a method and system for computing optimal energy generation schedule in multi-energy hubs.

BACKGROUND

With climate change concerns and its imminent impact to humankind, there is a growing push towards better energy utilization, reduce energy wastage, and diversification of energy sources viz., move towards sustainable carbon light energy sources. This push has increased the necessity to generate and consume energy of different types, such as: electricity, heat, hydrogen, natural gas etc. The presence of multiple energies has led to the adaptation of multi-carrier energy systems (MES) with a goal to achieve a higher energy supply efficiency and flexibility. An energy hub (EH) concept is introduced as a tool to model MES comprising of group of energy facilities where the production, conversion, storage, and consumption of different energy carriers occurs.

The emergence of an EH has fundamentally reorganized the manner in which portfolio allocations impact the decision-making process of various stakeholders such as: consumers, market operators, network operators, storage operators and generation companies. One of the main challenges in the EH is to ensure seamless operational integration and managing optimal energy flows of different energy types in both energy generation and consumption.

Conventional methods like Mean-Variance Portfolio (MVP) maximize the expected return for an acceptable level of risk and vice versa. The quotient of risk is measured by the covariance matrix of the assets in the portfolio. This MVP theory has been used widely by generation companies to find the optimal portfolio allocation across different electricity markets. Some of the relevant works dealing with electricity markets proposed a MVP based portfolio optimization (PO) approach for a electricity generation company to find the optimal portfolio between spot and bilateral electricity markets. In another PO approach for electricity retailers, demand is met through spot and forward wholesale markets. Yet another PO approach considered renewable energy sources as risk entity in day-ahead and intra-day market setup. Yet another approach focused on electricity consumers, wherein the portfolio allocation is finalized between either through contractual agreement (with no-risk) and/or from volatile markets (with some level of risk). Analytical methods for addressing uncertainties in electric power systems and MES such as stochastic/robust optimization are relatively mature, while risk assessment and management considering uncertainties are not covered by conventional methods. Hence there is a challenge in developing a system with multiple energy generation and optimization.

SUMMARY

Embodiments of the present disclosure present technological improvements as solutions to one or more of the above-mentioned technical problems recognized by the inventors in conventional systems. For example, in one embodiment, a method for computing optimal energy generation schedule in multi-energy hubs is provided. The method includes receiving, by one or more hardware processors, an energy volume, pertaining to each of a plurality of energy types, generated by a corresponding plurality of energy generation system associated with a multi-energy hub. Further, the method includes predicting, by the one or more hardware processors, a current market price value associated with each of the plurality of energy types based on a historic market price associated with each of a plurality of multi-energy day-ahead markets using a prediction technique. Furthermore, the method includes computing (206), by the one or more hardware processors, an expected revenue for each of the plurality of energy generation systems based on a corresponding predicted current market price, corresponding multi-energy bilateral agreement price and a corresponding generated energy volume. Furthermore, the method includes simultaneously computing, by the one or more hardware processors, an energy generation cost associated with each of the plurality of energy generation systems based on the corresponding generated energy volume using a corresponding energy generation cost function. Furthermore, the method includes simultaneously computing, by the one or more hardware processors, an energy conversion cost for each of a plurality of energy type pairs from among the plurality energy types based on an energy conversion efficiency matrix and an energy conversion cost matrix using an associated linear cost function. Furthermore, the method includes simultaneously computing, by the one or more hardware processors, an energy storage cost associated with each of the plurality of energy storage systems based on a corresponding charged and discharged energy and, a storage penalty cost associated with each of a plurality of multi-energy storage systems using an associated storage cost function. Furthermore, the method includes computing, by the one or more hardware processors, a market price variation risk associated with each of the plurality of multi-energy day-ahead markets based on historical market price and using Mean-Variance technique. Furthermore, the method includes obtaining, by the one or more hardware processors, a market price risk forecast associated with each of the plurality of multi-energy day-ahead markets based on the forecasted current market price and the historical market price using Mean-Variance Technique. Finally, the method includes generating, by the one or more hardware processors, an optimal energy generation schedule for each of the plurality of energy generation systems in a plurality of time window associated with a day to achieve one of (i) maximizing profit and (ii) minimize the loss based on the risk aversion factor using a portfolio optimization technique based on the expected revenue for each of the plurality of energy generation systems, energy generation cost associated with each of the plurality of energy generation systems, the energy conversion cost for each of a plurality of energy type pairs, the energy storage cost associated with each of the plurality of energy storage systems, the market price variation risk associated with each of the plurality of multi-energy day-ahead markets, the market price risk forecast, a plurality of constraints associated with the multi-energy generation systems, multi energy bilateral agreements and storage systems until the expected revenue is greater than a predefined revenue threshold and a risk value is less than a predefined risk threshold.

In another aspect, a system for computing optimal energy generation schedule in multi-energy hubs is provided. The system includes at least one memory storing programmed instructions, one or more Input /Output (I/O) interfaces, and one or more hardware processors operatively coupled to the at least one memory, wherein the one or more hardware processors are configured by the programmed instructions to receive an energy volume, pertaining to each of a plurality of energy types, generated by a corresponding plurality of energy generation system associated with a multi-energy hub. Further, the one or more hardware processors are configured by the programmed instructions to predict a current market price value associated with each of the plurality of energy types based on a historic market price associated with each of a plurality of multi-energy day-ahead markets using a prediction technique. Furthermore, the one or more hardware processors are configured by the programmed instructions to compute an expected revenue for each of the plurality of energy generation systems based on a corresponding predicted current market price, corresponding multi-energy bilateral agreement price and a corresponding generated energy volume. Furthermore, the one or more hardware processors are configured by the programmed instructions to simultaneously compute an energy generation cost associated with each of the plurality of energy generation systems based on the corresponding generated energy volume using a corresponding energy generation cost function. Furthermore, the one or more hardware processors are configured by the programmed instructions to simultaneously compute an energy conversion cost for each of a plurality of energy type pairs from among the plurality energy types based on an energy conversion efficiency matrix and an energy conversion cost matrix using an associated linear cost function. Furthermore, the one or more hardware processors are configured by the programmed instructions to simultaneously compute an energy storage cost associated with each of the plurality of energy storage systems based on a corresponding charged and discharged energy and, a storage penalty cost associated with each of a plurality of multi-energy storage systems using an associated storage cost function. Furthermore, the one or more hardware processors are configured by the programmed instructions to compute a market price variation risk associated with each of the plurality of multi-energy day-ahead markets based on historical market price and using Mean-Variance technique. Furthermore, the one or more hardware processors are configured by the programmed instructions to obtain a market price risk forecast associated with each of the plurality of multi-energy day-ahead markets based on the forecasted current market price and the historical market price using Mean-Variance Technique. Finally, the one or more hardware processors are configured by the programmed instructions to generate an optimal energy generation schedule for each of the plurality of energy generation systems in a plurality of time window associated with a day to achieve one of (i) maximizing profit and (ii) minimize the loss based on the risk aversion factor using a portfolio optimization technique based on the expected revenue for each of the plurality of energy generation systems, energy generation cost associated with each of the plurality of energy generation systems, the energy conversion cost for each of a plurality of energy type pairs, the energy storage cost associated with each of the plurality of energy storage systems, the market price variation risk associated with each of the plurality of multi-energy day-ahead markets, the market price risk forecast, a plurality of constraints associated with the multi-energy generation systems, multi energy bilateral agreements and storage systems until the expected revenue is greater than a predefined revenue threshold and a risk value is less than a predefined risk threshold.

In yet another aspect, a computer program product including a non-transitory computer-readable medium having embodied therein a computer program for computing optimal energy generation schedule in multi-energy hubs is provided. The computer readable program, when executed on a computing device, causes the computing device to receive an energy volume, pertaining to each of a plurality of energy types, generated by a corresponding plurality of energy generation system associated with a multi-energy hub. Further, the computer readable program, when executed on a computing device, causes the computing device to predict a current market price value associated with each of the plurality of energy types based on a historic market price associated with each of a plurality of multi-energy day-ahead markets using a prediction technique. Furthermore, the computer readable program, when executed on a computing device, causes the computing device to compute an expected revenue for each of the plurality of energy generation systems based on a corresponding predicted current market price, corresponding multi-energy bilateral agreement price and a corresponding generated energy volume. Furthermore, the computer readable program, when executed on a computing device, causes the computing device to simultaneously compute an energy generation cost associated with each of the plurality of energy generation systems based on the corresponding generated energy volume using a corresponding energy generation cost function. Furthermore, the computer readable program, when executed on a computing device, causes the computing device to simultaneously compute an energy conversion cost for each of a plurality of energy type pairs from among the plurality energy types based on an energy conversion efficiency matrix and an energy conversion cost matrix using an associated linear cost function. Furthermore, the computer readable program, when executed on a computing device, causes the computing device to simultaneously compute an energy storage cost associated with each of the plurality of energy storage systems based on a corresponding charged and discharged energy and, a storage penalty cost associated with each of a plurality of multi-energy storage systems using an associated storage cost function. Furthermore, the computer readable program, when executed on a computing device, causes the computing device to compute a market price variation risk associated with each of the plurality of multi-energy day-ahead markets based on historical market price and using Mean-Variance technique. Furthermore, the computer readable program, when executed on a computing device, causes the computing device to obtain a market price risk forecast associated with each of the plurality of multi-energy day-ahead markets based on the forecasted current market price and the historical market price using Mean-Variance Technique. Finally, the computer readable program, when executed on a computing device, causes the computing device to generate an optimal energy generation schedule for each of the plurality of energy generation systems in a plurality of time window associated with a day to achieve one of (i) maximizing profit and (ii) minimize the loss based on the risk aversion factor using a portfolio optimization technique based on the expected revenue for each of the plurality of energy generation systems, energy generation cost associated with each of the plurality of energy generation systems, the energy conversion cost for each of a plurality of energy type pairs, the energy storage cost associated with each of the plurality of energy storage systems, the market price variation risk associated with each of the plurality of multi-energy day-ahead markets, the market price risk forecast, a plurality of constraints associated with the multi-energy generation systems, multi energy bilateral agreements and storage systems until the expected revenue is greater than a predefined revenue threshold and a risk value is less than a predefined risk threshold.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system for computing optimal energy generation schedule in multi-energy hubs, in accordance with some embodiments of the present disclosure.
FIG. 1B illustrates a broad level functional architecture for a processor implemented method for computing optimal energy generation schedule in multi-energy hubs, in accordance with some embodiments of the present disclosure.
FIG. 2 (FIG. 2A and FIG. 2B) illustrates a flow diagram for the processor implemented method for computing optimal energy generation schedule in multi-energy hubs, in accordance with some embodiments of the present disclosure.
FIG. 3 illustrates an experimental setup for the processor implemented method for computing optimal energy generation schedule in multi-energy hubs, in accordance with some embodiments of the present disclosure.
FIG. 4A through FIG. 5C illustrates experimental results for the processor implemented method for computing optimal energy generation schedule in multi-energy hubs, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments.

Multi-energy portfolio decision making problems can be solved using multi-energy Portfolio Optimization (PO) approach. These decisions get more complicated in the presence of volatility or risks contributed by different players in Energy Hubs (EH). Risks could be due to weather or seasonal conditions, energy market conditions, demand prediction, energy surplus, inter-energy interconnects, market interconnects, generator technologies etc. Energy storage systems (ESS) are promising solutions to manage demand prediction uncertainty and energy surplus situations. Energy market conditions contribute to energy market price risks. This energy market price variability needs to be understood well by market players, especially energy generators and buyers, so as to participate and trade in different energy markets by taking calculated risks.

Quantifying the market price risk of the uncertainty in the future value of a portfolio is one of the key and challenging tasks of risk management. This quantification is usually achieved by risk models using risk measures such as stochastic programming (SP), robust optimization (RO), information gap decision theory (IGDT), chance constrained (CC) optimization, value at risk (VAR), conditional value at risk (CVAR), Markowitz's mean-variance model and the like. Markowitz's mean-variance model was proposed in the context of Modern Portfolio Theory (MPT) to arrive at optimal portfolio allocations to the asset classes by solving a quadratic problem under the presence of certain output constraints. The goal of MPT is to find the balance between maximizing the return and minimizing the risk. Applications of CVAR in electric power systems mainly focuses on one or more uncertainties such as load variations, Renewable Energy Sources (RES), electricity price variability etc., but a gap exists in terms of the formulating and solving PO problem considering inter multi-energy market price vulnerabilities for EHs with portfolio options comprising a) multi-energy markets sell bid, b) bilateral energy contractual demand, c) multi-energy storage's, and d) multi-energy generation systems.

To overcome the challenges of the conventional approaches, embodiments herein provide a method and system for computing optimized energy generation schedule in multi-energy hubs. The present disclosure has solved a specific PO problem for the EH covering all the four facets i.e., generation, conversion, storage and consumption. The system receives an energy volume generated by a plurality of energy generation systems associated with a multi-energy hub. Further, a current market price value associated with each of the plurality of energy types is predicted and an expected revenue for each of the plurality of energy generation systems is computed. Simultaneously, energy generation cost associated with each of the plurality of energy generation systems is computed based on the corresponding generated energy volume using a corresponding energy generation cost function. Simultaneously, an energy conversion cost is computed, and an energy storage cost is computed. Further, a market price variation risk associated with each of the plurality of multi-energy day-ahead markets is computed. Post computing market price variation risk, a market price risk forecast associated with each of the plurality of energy generation systems is computed based on the forecasted current market price and historical market price using Mean-Variance Technique. Finally, an optimal energy generation schedule is computed for each of the plurality of energy generation systems in a plurality of time window associated with a day to achieve one of (i) maximizing profit and (ii) minimize the loss based on the risk aversion factor using a portfolio optimization technique.

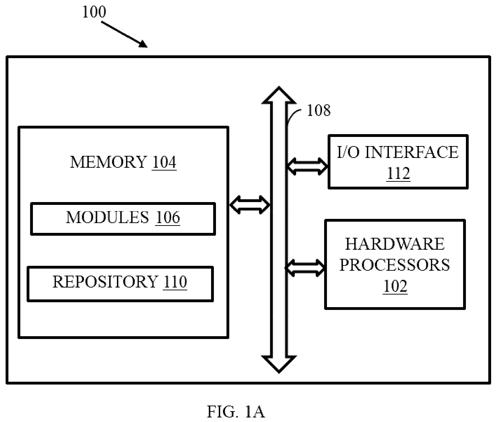

Referring now to the drawings, and more particularly to FIG. 1A through FIG. 5C, where similar reference characters denote corresponding features consistently throughout the figures, there are shown preferred embodiments, and these embodiments are described in the context of the following exemplary system and/or method.

FIG. 1A is a functional block diagram of a system 100 for computing optimal energy generation schedule in multi-energy hubs, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, memory 104 includes a plurality of modules 106. Memory 104 also includes a data repository (or repository) 110 for storing data processed, received, and generated by the plurality of modules 106.

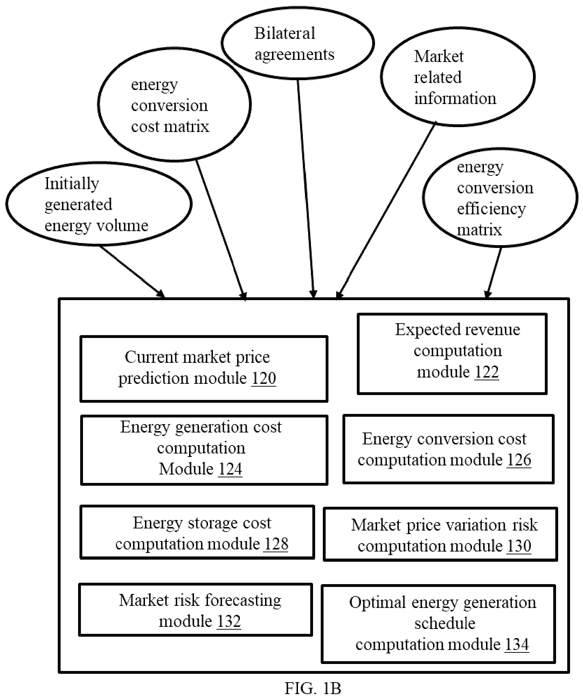

The plurality of modules 106 includes programs or coded instructions that supplement applications or functions performed by the system 100 for computing optimal energy generation schedule in multi-energy hubs. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for computing optimal energy generation schedule in multi-energy hubs. For example, the plurality of modules includes a current market price prediction module 120 (shown in FIG. 1B), an expected revenue computation module 122 (shown in FIG. 1B), an energy generation cost computation module 124

(shown in FIG. 1B), an energy conversion cost computation module 126 (shown in FIG. 1B), an energy storage cost computation module 128 (shown in FIG. 1B), a market price variation risk computation module 130 (shown in FIG. 1B), a market risk forecasting module 132 (shown in FIG. 1B) and an optimal energy generation schedule computation module 134 (shown in FIG. 1B).

FIG. 1B illustrates a broad level functional architecture for a processor implemented method for computing optimal energy generation schedule in multi-energy hubs, in accordance with some embodiments of the present disclosure.

The data repository (or repository) 110 may include a plurality of abstracted pieces of code for refinement and data that is processed, received, or generated as a result of the execution of the plurality of modules in the module(s) 106.

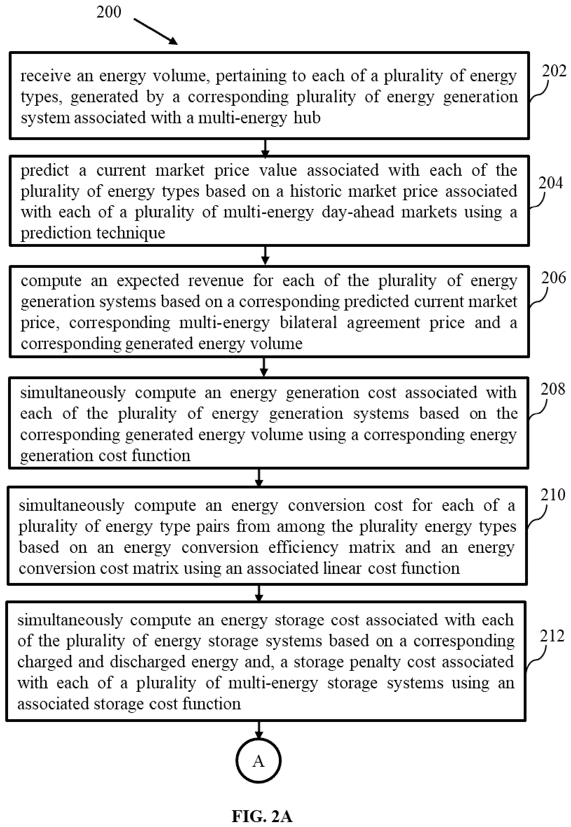

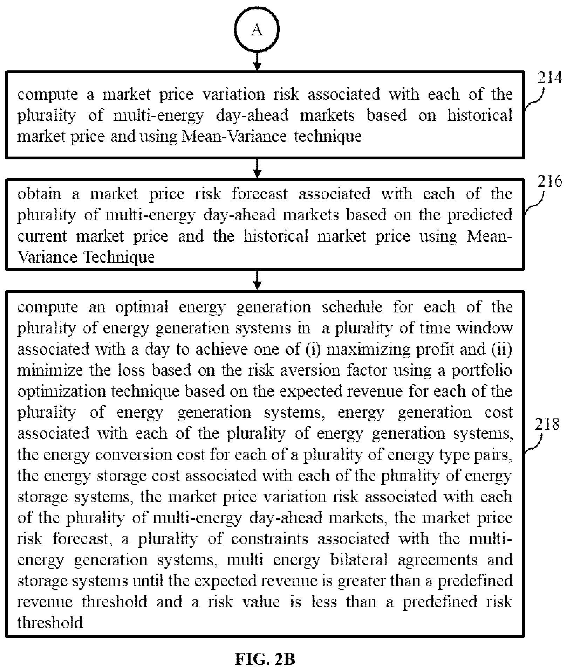

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). The working of the components of the system 100 are explained with reference to the method steps depicted in FIG. 2.

FIG. 2 is an exemplary flow diagrams illustrating a method 200 for computing optimal energy generation schedule in multi-energy hubs implemented by the system of FIG. 1A according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of method 200 of the present disclosure will now be explained with reference to the components or blocks of system 100 as depicted in FIG. 1A and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. Method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

At step 202 of method 200, one or more hardware processors 102 are configured by the programmed instructions to receive an energy volume/initial generation volume, pertaining to each of a plurality of energy types, generated by a corresponding plurality of energy generation system associated with a multi-energy hub. For example, a set of $n$ different energies output of the plurality of energy generation system is denoted as $G = \{g_1, g_2,............g_n\}$.

For example, Equation (1) represents the initial generation volumes of a multi-energy generator during time block t. The value $g_i(t)$ denotes the volume of energy type $i$ that is generated by the multi-energy generator during time block $t$.

$$g(t) = \begin{bmatrix} g_1(t) \\ . \\ g_n(t) \end{bmatrix} \dots\dots\dots\dots\dots\dots(1)$$

At step 204 of the method 200, the current market price prediction module 120 when executed by the one or more hardware processors 102 are configured by the programmed instructions to predict a current market price value associated with each of the plurality of energy types based on a historic market price and a plurality of multi-energy day-ahead markets using a prediction technique.

For example, 3 years of historical day-ahead wholesale electricity market price data is used for prediction. The day-ahead heat market price data was synthetically derived using a function which uses day-ahead natural gas market data and a conversion logic to reflect the real-world heat prices. The prediction technique used here is, but not limited to, Neural Hierarchical Interpolation for Time Series (NHITS) forecasting technique.

At step 206 of the method 200, the expected revenue computation module 122, when executed by the one or more hardware processors 102 are configured by the programmed instructions to compute an expected revenue for each of the plurality of energy generation systems based on a corresponding predicted current market price, a corresponding multi-energy bilateral agreement price and a corresponding generated energy volume. The multi-energy bilateral agreement is a long-term understanding between the energy generator and utilities.

At step 208 of the method 200, the energy generation cost computation module 124 when executed by the one or more hardware processors 102 are configured by the programmed instructions to simultaneously compute an energy generation cost associated with each of the plurality of energy generation systems based on the corresponding generated energy volume using a corresponding energy generation cost function.

At step 210 of the method 200, the energy conversion cost computation module 126 when executed by the one or more hardware processors 102 are configured by the programmed instructions to simultaneously compute an energy conversion cost for each of a plurality of energy type pairs from among the plurality energy types based on an energy conversion efficiency matrix and an energy conversion cost matrix using an associated linear cost function. The energy conversion efficiency matrix comprises. conversion efficiency associated with each of a plurality of energy converters to convert one energy type from among the plurality of energy types to another energy to another energy type from among the plurality of energy types. The energy conversion cost matrix comprises conversion cost associated with each of the plurality of energy converters to convert one energy type from among the plurality of energy types to another energy to another energy type from among the plurality of energy type.

For example, one energy type can also be converted into another by using an energy converter. Let CE be the Conversion Efficiency matrix in $R^{n \times n}$. The initial energy output of the generator, represented by vector $g(t)$ in $R^{n \times 1}$, can be linked with the resultant energy output, which is a combination of the original and converted energies, denoted by $Y(t)$ in $R^{n \times n}$, through Equation (1), where '$\odot$' denotes the Hadamard product.

$$ g(t) = \left( \frac{1}{CE} \odot Y(t) \right) \times 1^{n \times 1} \quad \ldots\ldots\ldots\ldots\ldots\ldots\ldots (2) $$

Equation (3) refers to the resultant energy outputs of a multi-energy generator following conversion. The expression $Y_{ij}(t)$ represents the volume of energy of type $i$ that has been converted to energy type $j$ during time block $t$.

$$ Y(t) = \begin{bmatrix} Y_{11}(t) & \cdots & Y_{1n}(t) \\ \vdots & \ddots & \vdots \\ Y_{n1}(t) & \cdots & Y_{nn}(t) \end{bmatrix} \quad \ldots\ldots\ldots\ldots\ldots\ldots\ldots (3) $$

The Energy Conversion Efficiency Matrix CE, denoted in Equation (4), is a formal matrix that monitors the conversion efficiencies of one energy type to another. Within this matrix, each term $\rho_{i,j}$ represents the conversion efficiency of energy type $i$ to energy type $j$. The diagonal elements of the matrix are equal to 1, as there is no loss of energy in conversion for same energy-to-energy conversion. It is important to note that the value of $\rho_{i,j}$ is bounded between 0 and 1.

$$ CE = \begin{bmatrix} 1 & \cdots & \rho_{n1} \\ \vdots & \ddots & \vdots \\ \rho_{n1} & \cdots & 1 \end{bmatrix} \quad \ldots\ldots\ldots\ldots\ldots\ldots\ldots (4) $$

The term $o(t)$ in $R^{n \times 1}$, represents the final energy quantities that are eligible for trade within each energy category/type. These quantities are derived from the initial generated volumes of various energy types through a process of conversion. It is linked to $Y(t)$ by the Equation (5).

$$ o(t) = \begin{bmatrix} o(t) \\ . \\ o_n(t) \end{bmatrix} = Y(t)^T \times 1^{n \times 1} \quad \ldots\ldots\ldots\ldots\ldots\ldots (5) $$

The energy quantities in $o(t)$ can be traded directly within the multi-energy Day-Ahead Market (DAM), or they can

7

be traded through multi-energy bilateral agreements. Alternatively, these quantities can be stored in energy type-specific storage's to effectively capitalize on the arbitrage opportunities presented by the DAM. The allocation of the final output energies in $o(t)$ is represented as $X(t)$ in the portfolio split. The relationship between the final output energies $o(t)$ and the portfolio split $X(t)$ is expressed through the Equation (6).

$$X(t) \times 1^{4 \times 1} = o(t)^T \times 1^{n \times 1} \dots\dots\dots\dots\dots\dots\dots\dots(6)$$

where, $X(t)$ denoted in Equation (7), is a matrix in $R^{n \times 4}$ which represents the portfolio split of each final output energy type. The terms $X_i^m(t), X_i^b(t), X_i^c(t)$ and $d(t)$ denotes the respective proportions of the final energy output of type $i$ that are traded in the DAM, transacted through bilateral agreements utilized for charging the energy storage, and discharged from the energy storage during time block t.

$$X(t) = \begin{bmatrix} X_1^m & \cdots & X_1^d \\ \vdots & \ddots & \vdots \\ X_n^m & \cdots & X_n^m \end{bmatrix} \dots\dots\dots\dots\dots\dots\dots\dots\dots\dots(7)$$

The prices of the DAM and bilateral agreements for each energy type during each time block $t$ are represented by the matrix $P(t)$ in $R^{n \times 2}$, as shown in Equation (8A).

$$P(t) = \begin{bmatrix} P_i^m & P_i^b \\ . & . \\ P_n^m & P_n^b \end{bmatrix} \dots\dots\dots\dots\dots\dots\dots\dots(8A)$$

At step 212 of the method 200, the energy storage cost computation module 128 when executed by the one or more hardware processors 102 are configured by the programmed instructions to simultaneously compute an energy storage cost associated with each of the plurality of energy storage systems based on a corresponding charged and discharged energy and, a storage penalty cost associated with each of a plurality of multi-energy storage systems using an associated storage cost function (for example, electricity storage degradation cost function $C^{deg}$) as given in equation (8B), wherein $C^{deg}$ is the electricity storage degradation cost, $\Psi_b$ is the profit guarantee factor, $C_b^{bat}$ is the capital cost, $m_b$ is the linear approximation slope, $E_b$ is the total energy charged and discharged per day, $BC_b$ is the battery capacity and $B$ is a set of batteries associated with the multi-energy storage system.

$$C^{deg} = \sum_{b \in B} \Psi_b \, C_b^{bat} \left| \frac{m_b}{100} \right| \frac{E_b}{BC_b} \dots\dots\dots\dots\dots\dots(8B)$$

At step 214 of the method 200, the market price variation risk computation module 130 when executed by the one or more hardware processors 102 are configured by the programmed instructions to compute a market price variation risk associated with each of the plurality of multi-energy day-ahead markets based on historical market price using Mean-Variance technique.

At step 216 of the method 200, the market risk forecasting module 132 when executed by the one or more hardware processors 102 are configured by the programmed instructions to obtain a market price risk forecast associated with each of the plurality of energy generation systems based on the forecasted current market price and historical market price using Mean-Variance Technique.

For example, assuming that energy markets are open, and the market prices are discovered on the basis of requests and offers by the buyers and sellers respectively. The prices in these markets thus can be considered volatile and have risks associated with them, whereas the prices of bilateral agreements are known prior, so they don't have any risk associated with them. Therefore, the price matrix $P(t)$ and portfolio split matrix $X(t)$ can be partitioned into two components: the risk part and the non-risk part, depending on the level of risk associated with each. The risk component of the price and portfolio split matrix is symbolized as $pr(t)$ and $xr(t)$ in $R^{n \times 1}$ as depicted in the Equation (9). Conversely, the non-risk component is designated as $pnr(t)$ in $R^{n \times 1}$ and $XNR(t)$ in $R^{n \times 3}$ as illustrated in the Equation (10).

$$pr(t) = \begin{bmatrix} P_i^m \\ \cdot \\ P_n^m \end{bmatrix}; \; xr(t) = \begin{bmatrix} X_i^m \\ \cdot \\ X_n^m \end{bmatrix}; \quad \dots\dots\dots\dots\dots\dots\dots\dots\dots(9)$$

$$pnr(t) = \begin{bmatrix} P_1^b \\ \cdot \\ P_n^b \end{bmatrix} \quad \dots\dots\dots\dots\dots\dots\dots\dots\dots\dots(10)$$

$$XNR(t) = \begin{bmatrix} X_1^b & \cdots & X_1^d \\ \vdots & \ddots & \vdots \\ X_n^b & \cdots & X_n^b \end{bmatrix} \dots\dots\dots\dots\dots\dots\dots(11)$$

Let $pr(t) = [P_1^m(t), P_2^m(t) \dots P_n^m(t)]^{\wedge}\mathrm{T}$ be the DAM price vector. The generator trades in these markets in a day-ahead and uses forecasts of the market prices $\widehat{pr}(t)$ to make the allocation decisions. Risk of market prices can be quantified by a covariance matrix of the prices and can be represented as $Q_1(t) = E[(pr(t) - E[pr(t)](pr(t)) - E(pr(t)])^T$. Since the forecasted prices are used for the decision making, the forecast error can also introduce a risk which can be estimated as $Q_2(t) = E[(e(t)) - E[e(t)](e(t)) - E(e(t)])^T$, where $e(t) = (pr(t) - \widehat{pr}(t))$.

The generator is assumed to be a price taker in the energy markets which means that the total traded amount is being cleared by the respective market operators/exchanges. The problem of the generator is to optimize the generation portfolio $g^*(t)$, final output energies portfolio $o^*(t)$ as well as decide on the optimal quantities to be traded in the various available options, $X^*(t)$ considering the various limits on the energy outputs.

At step 218 of the method 200, the optimal energy generation schedule computation module 134 when executed by the one or more hardware processors 102 are configured by the programmed instructions to generate an optimal energy generation schedule for each of the plurality of energy generation systems in a plurality of time window associated with a day to achieve one of (i) maximizing profit and (ii) minimize the loss based on the risk aversion factor using a portfolio optimization technique based on the expected revenue for each of the plurality of energy generation systems, energy generation cost associated with each of the plurality of energy generation systems, the energy conversion cost for each of a plurality of energy type pairs, the energy storage cost associated with each of the plurality of energy storage systems, the market price variation risk associated with each of the plurality of multi-energy day-ahead markets, the market price risk forecast, a plurality of constraints associated with the multi-energy generation systems, multi energy bilateral agreements and storage systems until the expected revenue is greater than a predefined revenue threshold and a risk value is less than a predefined risk threshold. The plurality of constraints associated with the multi-energy generation system comprises maximum and minimum generation limits, ramp-up and ramp-down limits. The plurality of constraints includes generator asset constraints, bilateral agreement constraints, natural gas constraints, inequality constraints and storage constraints.

The objective function for computing the optimal energy generation schedule is given in equation (12).

$$\underset{X(t)}{\mathrm{Max}} \sum_{t=0}^{t=24} [((\widehat{pr}^T(t) \times xr(t)) +$$

$$(pnr^T(t) \times xnr^1(t)) - gc(t) - 1^{1 \times n} \times CC(t) \odot Y(t) \times 1^{n \times 1} -$$

$$k_1 \times xr(t) \times Q_1(t) \times xr^T(t) - k_2 \times xr(t) \times Q_2(t) \times xr^T(t) -$$

$$SC^T(t) \times (xnr^2(t) + xnr^3(t))) -$$

$$uq(t) \times \lambda] \dots\dots\dots\dots\dots\dots\dots\dots(12)$$

where, CC(t) is the energy conversion cost matrix in $\mathrm{R}^{n \times n}$ as given in Equation (13). The diagonal elements of the matrix are 0 as there is no conversion cost incurred for same energy-to energy conversion. Each term $CC_{ij}$ denotes the cost to convert 1 unit of energy from type $i$ to type $j$. xnr1 represents first column elements in XNR matrix i.e., $xnr^1$ = XNR[:, 0], similarly $xnr^2$ and $xnr^3$ represents the second and third column elements in XNR matrix.

$$CC(t) = \begin{bmatrix} 0 & . & CC_{1n}(t) \\ . & . & . \\ CC_{n1}(t) & . & 0 \end{bmatrix} \dots\dots\dots\dots\dots\dots(13)$$

The term $gc(t)$ in $R^{1\times1}$ represents the cost associated with energy production on the energy generator. The value of $gc$ is unique to each type of energy generator and is contingent upon the cost function. The vector $sc(t)$ in $R^{n\times1}$ as given in Equation (14) represents the storage penalty cost for each energy type storage device.

$$sc(t) = \begin{bmatrix} sc_1 \\ . \\ sc_n \end{bmatrix} \dots\dots\dots\dots\dots\dots\dots\dots(14)$$

The formulated objective function, as expressed in Equation (12), aims to maximize revenue while simultaneously minimizing associated risks. The first term of the objective function denotes the revenue generated from multi energy markets, considering forecasted prices and bilateral agreements with predetermined prices. The second and third terms represents the generation costs and conversion costs, respectively. The fourth and fifth terms account for risks associated with market prices and their forecasts, with $k_1$ and $k_2$ representing risk aversion factors for market price risk and price forecast error risk, respectively. A higher value of the risk aversion factor implies that the generator is willing to take on lower risk, while a lower value implies a willingness to take on higher risk. The sixth term represents the cost of storing energy, while the last term represents the un-utilized fuel cost, with $\lambda$ representing the cost of storage or loss price.

**Generator Asset Constraints:** The energy generator is subject to ramping constraints when switching between generation levels. Additionally, the generator must not be operated below a designated threshold limit, referred to as the minimum operation level, as doing so will result in its shutdown. The maximum energy generation is restricted by the generator's maximum capacity. Equations (15, 16) have been formulated to ensure that the generator's output conforms strictly to the prescribed min-max and ramping limits for each time slot.

$$\underline{\phi_i} \leq g_i(t) \leq \overline{\phi_i}; \forall i \in G \dots\dots\dots\dots\dots(15)$$

$$-R_i^d \leq g_i(t) - g_i(t-1) \leq R_i^u; \forall i \in G \dots\dots\dots\dots(16)$$

In the case of multi-energy generators, the generation volume of one type of energy is intricately linked to the generation volume of another type. This relationship is established by the operational region of the energy generator and must be taken into account to ensure optimal operational performance. Equation (17) tracks these relationships, with $\zeta$ serving as the representation of the correlation between the generation volumes of the two energy types. It is noteworthy that this correlation is subject to variation across diverse energy generators. For a back-pressure type CHP which generates two energy types (electricity and heat), $\zeta$ denotes the power-to-heat ratio. For other multi-energy generator types, appropriate relation among multiple energy generation can be added to the constraint set.

$$g_i(t) = g_j(t) \times \zeta; \forall i,j \in G; i \neq j \dots\dots\dots\dots\dots\dots(17)$$

**Bilateral Agreement Constraints:** A bilateral agreement contract refers to a contractual arrangement between an energy generator and a utility, wherein the energy generator is permitted to sell its energy at a predetermined price. This agreement serves as a safeguard for the energy generator, guaranteeing a steady demand for its energy production. However, it is important to note that this safety net comes at a cost, resulting in lower returns compared to the day-ahead energy markets. Therefore, it is crucial to establish markets and bilateral agreements in order to maintain a revenue risk equilibrium. Bilateral agreements can be categorized into two types: fixed bilateral agreements, where the energy generator is obligated to sell a specific volume of generated energy to the utility, and variable bilateral agreements, where the energy generator is required to sell a certain volume of generated energy within a mutually agreed range. Equation (18) and (19) represent the constraints imposed by the two distinct forms of bilateral agreements on the energy generator. Certain generators utilize Equation (18), while others employ Equation (19), depending on the stipulations outlined in the terms of agreement.

$$xnr_i^1 = V_i(t); \forall i \in G \dots\dots\dots\dots\dots(18)$$

$$-V_i^d(t) \leq xnr_i^1(t) \leq V_i^u(t)\,; \forall i \in G \dots\dots\dots\dots\dots(19)$$

**Natural Gas Constraints:** Conventional energy generators utilize a specific type of fuel, such as natural gas or coal, to produce their intended energy output, such as electricity or heat. The procurement of fuel by energy generators is carried out through a contractual agreement, whereby a predetermined volume of $aq(t)$ is obtained at a fixed price of $ap(t)$ for each timeslot $t$. The fuel efficiency, denoted by $\eta$, represents the ratio of target energy generated to the amount of fuel consumed by the generator. It is crucial to optimize fuel utilization, as any un-utilized volume $uq(t)$ may result in storage costs or require selling/returning at lower prices. Equations (20, 21) normalizes input and output energy units using fuel efficiency $\eta$ and ensures that the generators output adheres to the contracted fuel volume.

$$uq(t) = aq(t) - \frac{1}{\eta_i}\sum_{i \in G}^n g_i(t)\dots\dots\dots\dots\dots(20)$$

$$\frac{1}{\eta_i}\sum_{i \in G}^n g_i(t) \leq aq(t)\dots\dots\dots\dots\dots\dots\dots\dots(21)$$

**Inequality Constraints:** Equations (22), (23), and (24) guarantee that the portfolio allocations to day-ahead energy markets, bilateral agreements, and energy storage charging are greater than or equal to zero. Equation (25) guarantees that the allocation relating to discharge from energy storage is less than or equal to zero. Equation (26) represents the inequality condition to ensure that the resultant output energies post-conversion are greater than or equal to zero.

$$XR(t) \geq 0\dots\dots\dots\dots\dots(22)$$

$$xnr^1(t) \geq 0\dots\dots\dots\dots(23)$$

$$xnr^2(t) \geq 0\dots\dots\dots\dots(24)$$

$$xnr^3(t) \geq 0\dots\dots\dots\dots(25)$$

$$Y(t) \geq 0\dots\dots\dots\dots\dots(26)$$

**Storage constraints:** Equation (27) is responsible for the modification of the state of charge (SOC) levels of the energy storages. The SOC levels are maintained within the prescribed operational limits of the energy storage, as guaranteed by equation (28). Equations (29) and (30) impose constraints on the rate at which an energy storage can either charge or discharge energy. Equation (31) ensures that only one of the charging or discharging processes can occur during any given time block. Equation 32 guarantees the preservation of the energy storage's SOC by the end of the day.

$$s_i(t) = s_i(t-1) + xnr_i^2(t) \times \eta_{ch}^i - \frac{xnr_i^3(t)}{\eta_{dis}^i}\,; \forall i \in G\dots\dots\dots\dots(27)$$

$$S_i^d \leq s_i(t) \leq S_i^u \forall i \in G\dots\dots\dots\dots\dots\dots\dots\dots(28)$$

$$0 \leq nnr_i^2(t) \leq C_i^{rate} * U_i^{ch}; \forall i \in G \dots\dots\dots\dots(29)$$

$$0 \leq nnr_i^3(t) \leq DC_i^{rate} * (1 - U_i^{ch}); \forall i \in G \dots\dots\dots\dots(30)$$

$$U_i^{ch} \in \{0,1\} \; ; \forall i \in G \quad \dots\dots\dots\dots\dots\dots\dots\dots\dots\dots (31)$$

$$s_i(t = 0) = s_i(t = 24) \dots\dots\dots\dots\dots\dots\dots\dots\dots (32)$$

$$t \in \{1,2,3\dots, T = 24\}; \dots\dots\dots\dots\dots\dots\dots\dots (33)$$

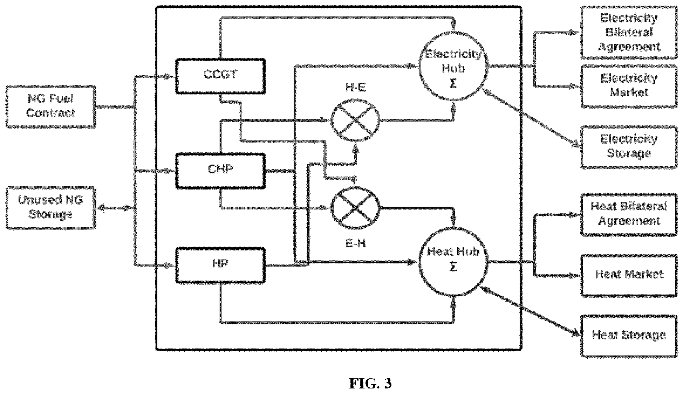

**Experimentation:** A simplified representation of an EH, consisting of two types of energy carriers - electricity and heat, is depicted in FIG. 3. It comprises of one multi-energy generator CHP (Combined Heat and Power generator) and two individual generators - a combined cycle gas turbine (CCGT) and a heat pump (HP). Each of these generators is fueled by natural gas through contractual agreements. The EH is equipped with an Electricity Storage (ES) and a Heat Storage (HS) system to store excess energy and facilitate trading when necessary. A series of inter energy converters are employed to convert electricity to heat and vice versa. The EH's outputs from the generators and energy storage's can be either submitted to various DAMs for different energy carriers or utilized to meet bilateral multi-energy demands. The efficacy of the present disclosure has been examined through the utilization of real-world data. Specifically, energy generation data obtained from the Pure Electricity generator (CCGT), and CHP are analyzed. The inter energy conversion efficiency of each generator has been taken into consideration. In this study, the back-pressure CHP was employed, which adheres to the linear relationship (Equation 17) between generated heat and electricity volumes. Table 1 illustrates the nomenclature and values considered for the model parameters during experimenting the present disclosure.

Table 1

| Parameter | Description | Value |
|---|---|---|
| $\eta$ | Fuel Efficiency | 0.75 |
| $aq$ | Input Natural Gas fuel contract quantity | 533.33 MWh |
| $\phi_i^d$ | Min generation capacity of CCGT, CHP | - |
| $\phi_i^u$ | Max generation capacity of CCGT, CHP | - |
| $R_i^d$ | Ramp down limit of CCGT,CHP | - |
| $R_i^u$ | Ramp up limit of CCGT,CHP | - |
| $\zeta$ | CHP heat to electricity conversion efficiency | 0.45 |
| $V_i^d$ | Min bilateral variable demand contract | 0.001 * $gi(t)$ |
| $V_i^u$ | Min bilateral variable demand contract | 0.003 * $gi(t)$ |
| $S_e^d$ | Minimum storage capacity of Electricity Storage | 20 MWh |
| $S_e^u$ | Maximum storage capacity of Electricity Storage | 100 MWh |
| $S_h^d$ | Minimum storage capacity of Heat Storage | 20 MWh |
| $S_h^u$ | Maximum storage capacity of Heat Storage | 80 MWh |
| $\eta_{ch}^e$ | BESS charging efficiency | 0.9 |
| $\eta_{dch}^e$ | BESS discharging efficiency | 0.9 |

(continued)

| Parameter | Description | Value |
|---|---|---|
| $\eta_{ch}^{h}$ | Heat storage charging efficiency | 0.88 |
| $\eta_{dch}^{h}$ | Heat storage discharging efficiency | 0.88 |
| $DC_{e}^{rate}$ | Electricity storage discharging rate | 25 MWh |
| $C_{e}^{rate}$ | Electricity storage charging rate | 25 MWh |
| $DC_{h}^{rate}$ | Heat storage discharging rate | 20 MWh |
| $C_{h}^{rate}$ | Heat storage charging rate | 20 MWh |
| $sc(t)$ | Storage penalty cost function for each storage devices | - |
| $gc(t)$ | Cost function to produce energy by a generator | - |

**Performance Metrics:** List of relevant Metrices used to evaluate the outcome of the present disclosure are as follows:

(1) Revenue (€) - Earnings of the energy generator by selling the generated energy in the available day-ahead energy markets and serving bilaterally demand agreements.
(2)

$$\text{Profit (€)} = (\text{Revenue - Cost})$$

(3)

Generator Utilization ($GU$) % - It denotes the effective use of energy generator = Used capacity/Total capacity.

(4) Revenue Dev % = |Realized Revenue - Expected Revenue|/Realized Revenue $\times$ 100.

(5) Realized Revenue (RR) is based on actual energy market price, whereas Expected Revenue (ER) is based on forecasted energy market price

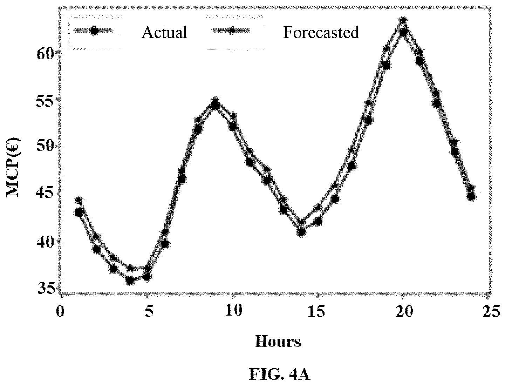

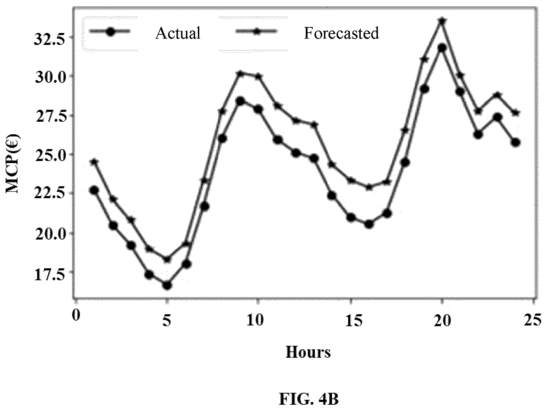

Results: FIG. 4A and 4B shows the actual $p(t)$ and forecasted $p(t)$ Market Clearing Price per MWh unit energy (MCP) for the Heat and Electricity market test data (from 1$^{st}$ January 2020 to 30$^{th}$ June 2020 data). Table 2 shows a plurality of scenarios used for testing. Now referring to Table 2, F-Fixed, V-Variable, E-Electricity, H-Heat.

Table 2

| Scenario | Bilateral | | Market energy | Storage energy | NG fuel penalty $\lambda$ |
|---|---|---|---|---|---|
| | Type | Energy | | | |
| 1 | - | - | E | - | 0 |
| 2 | - | - | E | E | 0 |
| 3 | - | - | E,H | - | 0 |
| 4 | - | - | E,H | E,H | 0 |
| 5 | F | E | E | - | 0 |

(continued)

| Scenario | Bilateral | | Market energy | Storage energy | NG fuel penalty $\lambda$ |
|---|---|---|---|---|---|
| | Type | Energy | | | |
| 6 | V | E | E | - | 0 |
| 7 | V | E | E | E | 0 |
| 8 | F | E | E,H | - | 0 |
| 9 | V | E | E,H | - | 0 |
| 10 | V | E | E,H | E,H | 0 |
| 11 | F | E,H | E,H | - | 0 |
| 12 | V | E,H | E,H | - | 0 |
| 13 | V | E,H | E,H | E,H | 0 |

Table 3 captures the Scenario wise simulation run results for all the Scenarios defined in Table 2. For example, 6 months of test data from Jan 2020 to June 2020 is considered for this simulation run. Simulation results consists of Realized Revenue, Generator utilization and Revenue deviation for both with and without considering risk aversion scheme.

Table 3

| Site numbe r | With no risk aversion scheme $k_1=0$, $k_2=0$ | | | | With no risk aversion scheme $k_1=1$, $k_2=1$ | | |
|---|---|---|---|---|---|---|---|
| | Realized revenue $\in$ | Generator utilization % | Revenu e Dev. % | | Realized revenue $\in$ | Generator utilization % | Revenu e Dev. % |
| 1 | 70557.99 | 53.96 | 22.42 | | 24646.64 | 10 | 23.60 |
| 2 | 172004.7 4 | 53.96 | 21.21 | | 24523.27 | 10 | 22.57 |
| 3 | 180799.0 7 | 56.24 | 17.13 | | 23162.46 | 10 | 11.27 |
| 4 | 182950.0 4 | 56.33 | 16.06 | | 22581.49 | 10 | 10.13 |
| 5 | 159472.9 4 | 53.24 | 15.16 | | 24302.27 | 10 | 15.74 |
| 6 | 166394.1 9 | 53.87 | 14.74 | | 24130.08 | 10 | 13.03 |
| 7 | 167839.0 2 | 53.87 | 14.57 | | 24043.82 | 10 | 12.70 |
| 8 | 168314.0 3 | 55.38 | 12.84 | | 23114.93 | 10 | 8.36 |
| 9 | 175829.0 7 | 56.15 | 12.90 | | 23091.16 | 10 | 7.11 |
| 10 | 178129.1 6 | 56.29 | 12.43 | | 22678.27 | 10 | 6.46 |
| 11 | 116148.7 4 | 52.82 | 6.33 | | 22893.15 | 10 | 3.83 |
| 12 | 157767.7 1 | 53.04 | 7.72 | | 22758.50 | 10 | 0.93 |
| 13 | 160129.0 4 | 53.96 | 7.96 | | 22753.40 | 10 | 0.92 |

**Impact of considering multi-energy day-ahead market (DAM):** In an embodiment, single-energy market Scenario 1 and multi-energy market Scenario 3, both with and without risk aversion scheme were considered, to test the efficacy of markets to CCGT (Combined Cycle Gas Turbine) generator's performance. From the simulation run using CCGT generator for Scenario 1 and Scenario 3 without risk aversion scheme, it was found that, Scenario 3 results show a 6% improvement in terms of realized Revenue when compared with a Scenario 1 result. This improvement in revenue is primarily due to the fact that heat market provides more favorable pricing compared to the electricity market at all time slots as depicted in FIGS 3A and 3B. The CCGT generator chooses the heat market when the expected revenue derived from the Heat market exceeds the expected revenue from the Electricity market after accounting for energy conversion costs. Also, it was found that *GU* improves to the tune of 4.2%. This improvement in *GU* can be attributed to improved market prices in the Heat market, which serves as a strong incentive to increase generation volume. Similarly, revenue deviation shows a notable decrease (improvement) of 23.6% as a result of the reduced variance observed in the heat market when compared to electricity market.

With risk aversion Scenario3 (with $k1 > 0$ and $k2 \geq 0$), the CCGT generator divides the energy produced between the heat market and electricity market, taking into account the combination of market price and price variability/risk. The allocation of energy favors the market with higher prices when the risk aversion value is low and favors the market with less variance in market prices and/or forecasting error when the risk aversion value is high. When both $k_1 = 1$ and $k_2 = 1$, the CCGT generator exhibits a preference for a low Revenue deviation. Heat market provides more favorable prices and lower variance, resulting in a biased allocation towards Heat market. This allocation is determined by the inter-energy covariance between electricity and heat market. However, this bias leads to a loss of realized revenue in the form of dissipated energy owing to energy conversion and at some level ignoring electricity market. Consequently, the realized Revenue in Scenario 3 shows a decline of 6% when compared to Scenario 1. It is important to note that the realized Revenue are bound to change with change in variance and market prices. Elevated values of $k1$ and $k2$ indicate that the generator demonstrates a pronounced inclination to abstain from participating in ventures involving risk. The notable fluctuations in market prices and the occurrence of forecasting errors impede the CCGT generator's capacity to enhance its generation capabilities, consequently leading it to operate at the minimum $GU$ level of 10%. This is further complemented by a substantial decrease of 52.6% in the Revenue deviation with Scenario 3 when compared to Scenario 1 results.

**Impact of considering storage:** Single energy market like Scenario 1, multi-energy market Scenario 3 and multi-energy market with storage Scenario 4, all with and without risk aversion scheme are considered, to test the efficacy of storage and markets to CCGT generator's performance. The CCGT generator's realized revenue undergoes an increase when storage is employed, as it efficiently exploits the arbitrage opportunities offered by the multi-energy markets. From the results, it was found that the realized Revenue is higher in multi-energy markets in comparison with single energy markets. This amplified improvement can be attributed to the utilization of multi-energy storage's, which enable the exploitation of arbitrage opportunities presented by multi-energy markets.

When contemplating risk aversion factors in the utilization of storage, the reduction in the revenue deviation contributes to the supplementary advantage of realized revenue growth facilitated by storage. The allocation of energy to different multi-energy markets will be determined by considering the temporal and spatial distribution of market price fluctuations, error in forecasted price, as well as the chosen risk aversion scheme of the generator, and market prices. Heat storage is utilized in response to higher market prices in the heat market and lower variance, as it allows for the exploitation of temporal variations in market price fluctuations and forecasting errors of heat market. This utilization results in a significant reduction of 10.1% in Revenue deviation in Scenario 4 compared to Scenario 3. The underlying factor behind the decline in realized revenue is identical to the factor responsible for the decrease in realized Revenue observed in multi-energy markets. Also, an increase of 7.2% in realize revenue with Scenario 4 is observed when compared to Scenario 1.

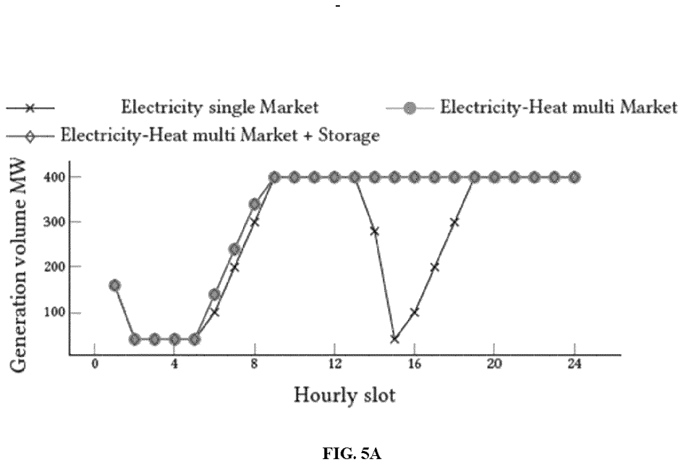

In an embodiment, simulation was run using CCGT generator for Scenario1, Scenario 3, and Scenario 4, all without risk aversion scheme for a one-day sample test data FIG. 5A shows the CCGT's generation volume for Scenario1, Scenario 3, and Scenario 4. It was found that CCGT's generation volume shows a consistent stabilizing behavior around 400 MW for Scenario 3 and Scenario 4 runs, but with Scenario 1, there is a drop in generation volume between slots 13 and 19. This phenomenon is attributed to higher heat market prices, which provide stronger impetus for the CCGT generator to continue generating into Heat market in addition to Electricity market. The comparable generation profile for Scenarios 3 and Scenario 4, is a result of the generator being restricted by the constraints of minimum and maximum generation capacity, as well as ramping capacity.

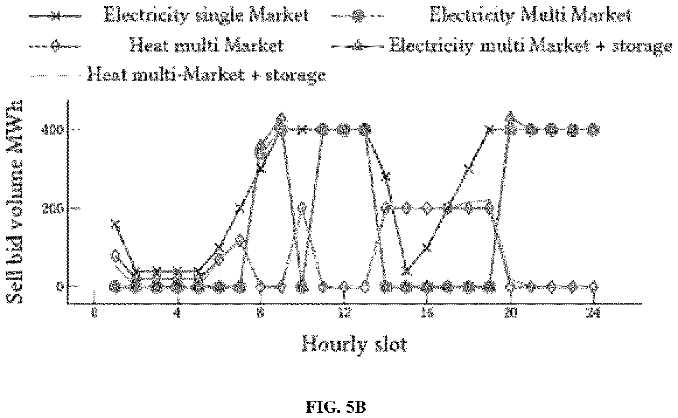

FIG. 5A shows the quantities of energy traded (sell bids) in various markets for Scenario 1, Scenario 3 and Scenario 4. In case of Scenario 1, the CCGT generator is compelled to trade all of the energy produced in the electricity market. Conversely, in a multi-energy market Scenario 3 and Scenario 4, the generator divides the generated energy and trades it in both markets, taking into account the prevailing prices in the different markets. This division is further facilitated when storage is utilized as a service, as it enables the storage of energy during periods of lower prices and subsequent sale during periods of higher prices. It was observed that heat storage unit charges during the first five time slots when the Heat market price is lower, and discharges during slots 18, 19, and 20 when the Heat market price is higher. Similarly, the electricity storage unit charges during the first three slots and discharges during slots 8, 9, and 20. The impact of this charging and discharging can be observed at these specific time slots on bid volumes of different energy markets in FIG. 5B.

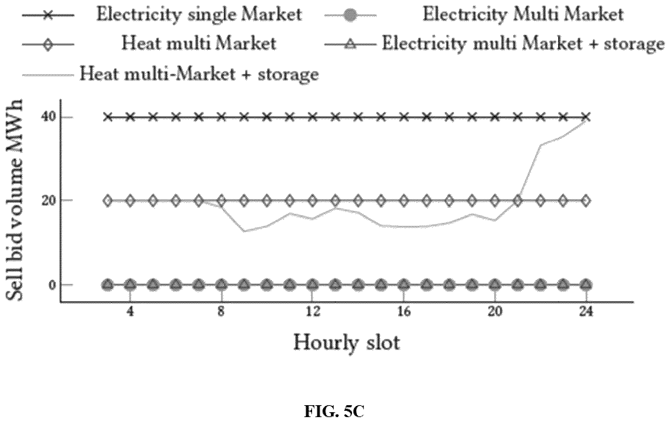

In another embodiment, a simulation was run using a CCGT generator for Scenario 1, Scenario 3, and Scenario 4, all incorporating risk aversion, based on a one-day sample test data. FIG. 5C, depicts the charging-discharging schedules of Heat and Electricity energy storage units, as well as the traded volumes in several markets. In a multi-energy market, irrespective of the presence of storage, all the generated energy is allocated towards the heat market due to the higher prices and lower variability observed in comparison to the electricity market and inter-energy covariances as depicted in 11. Consequently, the market bid volume profile for the electricity market, with and without storage, overlaps in FIG. 5C. As a result, the heat storage unit is primarily utilized, with its charging and discharging operations based on price variability and forecast errors. Heat storage charges during slots 8 to 21 when the variance is higher and market prices are low, and discharges during slots 22 to 24 when the variance is lower and market prices are higher. Therefore, the bid volume profile for the heat market, with and without storage, varies as illustrated in FIG. 5C.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address the unresolved problem of computing optimal energy generation schedule in multi-energy hubs. The present disclosure improves sustainability and increasing consumption of different forms of energy, it is inevitable to develop models for optimal scheduling and trading of energy in a form which reduces the conversion loss as well as provide maximum financial incentive to the generator The present disclosure helps the generator in maximizing the revenue from sale of energy in multiple forms. In particular, contribution of the present disclosure are: (i) An optimal energy trading model considering multiple forms of energy (ii) Market price Risk model is considered by building upon the standard Markowitz Portfolio Theory (iii) Asset constraints model of generators is considered capturing Min-Max and Ramping capacity limits and (iv) Storage is considered to help with energy arbitrage as well as minimize risk.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

**1.** A processor-implemented method (200), the method comprising:

receiving (202), by one or more hardware processors, an energy volume, pertaining to each of a plurality of energy types, generated by a corresponding plurality of energy generation system associated with a multi-energy hub;

predicting (204), by the one or more hardware processors, a current market price value associated with each of the plurality of energy types based on a historic market price associated with each of a plurality of multi-energy day-ahead markets using a prediction technique;

computing (206), by the one or more hardware processors, an expected revenue for each of the plurality of energy generation systems based on a corresponding predicted current market price, corresponding multi-energy bilateral agreement price and a corresponding generated energy volume;

simultaneously computing (208), by the one or more hardware processors, an energy generation cost associated with each of the plurality of energy generation systems based on the corresponding generated energy volume using a corresponding energy generation cost function;

simultaneously computing (210), by the one or more hardware processors, an energy conversion cost for each of a plurality of energy type pairs from among the plurality energy types based on an energy conversion efficiency matrix and an energy conversion cost matrix using an associated linear cost function;

simultaneously computing (212), by the one or more hardware processors, an energy storage cost associated with each of the plurality of energy storage systems based on a corresponding charged and discharged energy and, a storage penalty cost associated with each of a plurality of multi-energy storage systems using an associated storage cost function;

computing (214), by the one or more hardware processors, a market price variation risk associated with each of the plurality of multi-energy day-ahead markets based on historical market price and using Mean-Variance technique;

obtaining (216), by the one or more hardware processors, a market price risk forecast associated with each of the plurality of multi-energy day-ahead markets based on the predicted current market price and the historical market price using Mean-Variance Technique; and

generating (218), by the one or more hardware processors, an optimal energy generation schedule for each of the plurality of energy generation systems in a plurality of time window associated with a day to achieve one of (i) maximizing profit and (ii) minimize the loss based on the risk aversion factor using a portfolio optimization technique based on the expected revenue for each of the plurality of energy generation systems, energy generation cost associated with each of the plurality of energy generation systems, the energy conversion cost for each of a plurality of energy type pairs, the energy storage cost associated with each of the plurality of energy storage systems, the market price variation risk associated with each of the plurality of multi-energy day-ahead markets, the market price risk forecast, a plurality of constraints associated with the multi-energy generation systems, multi energy bilateral agreements and storage systems until the expected revenue is greater than a predefined revenue threshold and a risk value is less than a predefined risk threshold.

2. The method as claimed in claim 1, wherein the energy conversion efficiency matrix comprises. conversion efficiency associated with each of a plurality of energy converters to convert one energy type from among the plurality of energy types to another energy to another energy type from among the plurality of energy types.

3. The method as claimed in claim 1, wherein the energy conversion cost matrix comprises conversion cost associated with each of the plurality of energy converters to convert one energy type from among the plurality of energy types to another energy to another energy type from among the plurality of energy types.

4. The method as claimed in claim 1, wherein the multi-energy bilateral agreement is a long-term understanding between the energy generator and utilities.

5. The method as claimed in claim 1, wherein the plurality of constraints associated with the multi-energy generation system comprises maximum and minimum generation limits, ramp-up and ramp-down limits.

6. A system (100) comprising:
at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:

receive an energy volume, pertaining to each of a plurality of energy types, generated by a corresponding plurality of energy generation system associated with a multi-energy hub;

predict a current market price value associated with each of the plurality of energy types based on a historic market price associated with each of a plurality of multi-energy day-ahead markets using a prediction technique;

compute an expected revenue for each of the plurality of energy generation systems based on a corresponding predicted current market price, corresponding multi-energy bilateral agreement price and a corresponding generated energy volume;

simultaneously compute an energy generation cost associated with each of the plurality of energy generation systems based on the corresponding generated energy volume using a corresponding energy generation cost function;

simultaneously compute an energy conversion cost for each of a plurality of energy type pairs from among the plurality energy types based on an energy conversion efficiency matrix and an energy conversion cost matrix using an associated linear cost function;

simultaneously compute an energy storage cost associated with each of the plurality of energy storage systems based on a corresponding charged and discharged energy and, a storage penalty cost associated with each of a plurality of multi-energy storage systems using an associated storage cost function;

compute a market price variation risk associated with each of the plurality of multi-energy day-ahead markets based on historical market price and using Mean-Variance technique;

obtain a market price risk forecast associated with each of the plurality of multi-energy day-ahead markets based on the predicted current market price and the historical market price using Mean-Variance Technique; and

generate an optimal energy generation schedule for each of the plurality of energy generation systems in a plurality of time window associated with a day to achieve one of (i) maximizing profit and (ii) minimize the loss based on the risk aversion factor using a portfolio optimization technique based on the expected revenue for each of the plurality of energy generation systems, energy generation cost associated with each of the plurality of energy generation systems, the energy conversion cost for each of a plurality of energy type pairs, the energy storage cost associated with each of the plurality of energy storage systems, the market price variation risk associated with each of the plurality of multi-energy day-ahead markets, the market price risk forecast, a plurality of constraints associated with the multi-energy generation systems, multi energy bilateral agreements and storage systems until the expected revenue is greater than a predefined revenue threshold and a risk value is less than a predefined risk threshold.

7. The system as claimed in claim 6, wherein the energy conversion efficiency matrix comprises. conversion efficiency associated with each of a plurality of energy converters to convert one energy type from among the plurality of energy types to another energy to another energy type from among the plurality of energy types.

8. The system as claimed in claim 6, wherein the energy conversion cost matrix comprises conversion cost associated with each of the plurality of energy converters to convert one energy type from among the plurality of energy types to another energy to another energy type from among the plurality of energy types.

9. The system as claimed in claim 6, wherein the multi-energy bilateral agreement is a long-term understanding between the energy generator and utilities.

10. The system as claimed in claim 6, wherein the plurality of constraints associated with the multi-energy generation system comprises maximum and minimum generation limits, ramp-up and ramp-down limits.

11. One or more non-transitory machine-readable information storage mediums comprising one or more instructions which when executed by one or more hardware processors cause:

receiving, an energy volume, pertaining to each of a plurality of energy types, generated by a corresponding plurality of energy generation system associated with a multi-energy hub;

predicting, a current market price value associated with each of the plurality of energy types based on a historic market price associated with each of a plurality of multi-energy day-ahead markets using a prediction technique;

computing, an expected revenue for each of the plurality of energy generation systems based on a corresponding predicted current market price, corresponding multi-energy bilateral agreement price and a corresponding generated energy volume;

simultaneously computing, an energy generation cost associated with each of the plurality of energy generation systems based on the corresponding generated energy volume using a corresponding energy generation cost function;

simultaneously computing, an energy conversion cost for each of a plurality of energy type pairs from among the plurality energy types based on an energy conversion efficiency matrix and an energy conversion cost matrix using an associated linear cost function;

simultaneously computing, an energy storage cost associated with each of the plurality of energy storage systems based on a corresponding charged and discharged energy and, a storage penalty cost associated with each of a plurality of multi-energy storage systems using an associated storage cost function;

computing, a market price variation risk associated with each of the plurality of multi-energy day-ahead markets based on historical market price and using Mean-Variance technique;

obtaining, a market price risk forecast associated with each of the plurality of multi-energy day-ahead markets based on the predicted current market price and the historical market price using Mean-Variance Technique; and

generating, an optimal energy generation schedule for each of the plurality of energy generation systems in a plurality of time window associated with a day to achieve one of (i) maximizing profit and (ii) minimize the loss based on the risk aversion factor using a portfolio optimization technique based on the expected revenue for each of the plurality of energy generation systems, energy generation cost associated with each of the plurality of energy generation systems, the energy conversion cost for each of a plurality of energy type pairs, the energy storage cost associated with each of the plurality of energy storage systems, the market price variation risk associated with each of the plurality of multi-energy day-ahead markets, the market price risk forecast, a plurality of constraints associated with the multi-energy generation systems, multi energy bilateral agreements and storage systems until the expected revenue is greater than a predefined revenue threshold and a risk value is less than a predefined risk threshold.

12. The one or more non-transitory machine-readable information storage mediums as claimed in claim 11, wherein the energy conversion efficiency matrix comprises. conversion efficiency associated with each of a plurality of energy converters to convert one energy type from among the plurality of energy types to another energy to another energy type from among the plurality of energy types.

13. The one or more non-transitory machine-readable information storage mediums as claimed in claim 11, wherein the energy conversion cost matrix comprises conversion cost associated with each of the plurality of energy converters to convert one energy type from among the plurality of energy types to another energy to another energy type from among the plurality of energy types.

14. The one or more non-transitory machine-readable information storage mediums as claimed in claim 11, wherein the multi-energy bilateral agreement is a long-term understanding between the energy generator and utilities.

15. The one or more non-transitory machine-readable information storage mediums as claimed in claim 11, wherein the plurality of constraints associated with the multi-energy generation system comprises maximum and minimum generation limits, ramp-up and ramp-down limits.

100

MEMORY 104

MODULES 106

REPOSITORY 110

108

I/O INTERFACE 112

HARDWARE PROCESSORS 102

FIG. 1A

FIG. 1B

200

| |
|---|
| receive an energy volume, pertaining to each of a plurality of energy types, generated by a corresponding plurality of energy generation system associated with a multi-energy hub |

202

| |
|---|
| predict a current market price value associated with each of the plurality of energy types based on a historic market price associated with each of a plurality of multi-energy day-ahead markets using a prediction technique |

204

| |
|---|
| compute an expected revenue for each of the plurality of energy generation systems based on a corresponding predicted current market price, corresponding multi-energy bilateral agreement price and a corresponding generated energy volume |

206

| |
|---|
| simultaneously compute an energy generation cost associated with each of the plurality of energy generation systems based on the corresponding generated energy volume using a corresponding energy generation cost function |

208

| |
|---|
| simultaneously compute an energy conversion cost for each of a plurality of energy type pairs from among the plurality energy types based on an energy conversion efficiency matrix and an energy conversion cost matrix using an associated linear cost function |

210

| |
|---|
| simultaneously compute an energy storage cost associated with each of the plurality of energy storage systems based on a corresponding charged and discharged energy and, a storage penalty cost associated with each of a plurality of multi-energy storage systems using an associated storage cost function |

212

A

**FIG. 2A**

A

214

compute a market price variation risk associated with each of the plurality of multi-energy day-ahead markets based on historical market price and using Mean-Variance technique

216

obtain a market price risk forecast associated with each of the plurality of multi-energy day-ahead markets based on the predicted current market price and the historical market price using Mean-Variance Technique

218

compute an optimal energy generation schedule for each of the plurality of energy generation systems in a plurality of time window associated with a day to achieve one of (i) maximizing profit and (ii) minimize the loss based on the risk aversion factor using a portfolio optimization technique based on the expected revenue for each of the plurality of energy generation systems, energy generation cost associated with each of the plurality of energy generation systems, the energy conversion cost for each of a plurality of energy type pairs, the energy storage cost associated with each of the plurality of energy storage systems, the market price variation risk associated with each of the plurality of multi-energy day-ahead markets, the market price risk forecast, a plurality of constraints associated with the multi-energy generation systems, multi energy bilateral agreements and storage systems until the expected revenue is greater than a predefined revenue threshold and a risk value is less than a predefined risk threshold

**FIG. 2B**

**FIG. 3**

**FIG. 4A**

FIG. 4B

EP 4 571 607 A1

-

FIG. 5A

27

**FIG. 5B**

**FIG. 5C**

Europäisches Patentamt

European Patent Office

Office européen des brevets

# EUROPEAN SEARCH REPORT

**Application Number**

EP 24 21 3469

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/284458 A1 (SUN HONGBO [US]) 8 September 2022 (2022-09-08) * abstract * * paragraph [0064] - paragraph [0190] * * paragraph [0008] - paragraph [0043]; figures 1-10B * | 1-15 | INV. G06Q10/04 G06Q50/06 H02J3/00 |
| Y | US 2014/330695 A1 (STEVEN ALAIN P [US] ET AL) 6 November 2014 (2014-11-06) * abstract * * paragraph [0010] - paragraph [0055] * * paragraph [0092] - paragraph [0486] * * figures 1-28 * | 1-15 | |
| Y | ZENG SHUNQI ET AL: "The integrated operation of multiple energy carrier used to enhance the reliability of the integrated energy system", 2017 IEEE CONFERENCE ON ENERGY INTERNET AND ENERGY SYSTEM INTEGRATION (EI2), IEEE, 26 November 2017 (2017-11-26), pages 1-5, XP033288312, DOI: 10.1109/EI2.2017.8245575 [retrieved on 2018-01-02] * abstract * * section I section II * * figure 1 * * table 1 * | 1-15 | **TECHNICAL FIELDS SEARCHED (IPC)** G06Q H02J |

The present search report has been drawn up for all claims

| Place of search | Date of completion of the search | Examiner |
|---|---|---|
| Munich | 28 April 2025 | Körbler, Günther |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 3469

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2025

| Patent document cited in search report | Publication date | Patent family member(s) | | Publication date |
|---|---|---|---|---|
| US 2022284458 A1 | 08-09-2022 | JP | 2022130284 A | 06-09-2022 |
| | | US | 2022284458 A1 | 08-09-2022 |
| US 2014330695 A1 | 06-11-2014 | US | 2014330695 A1 | 06-11-2014 |
| | | US | 2016190805 A1 | 30-06-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321084876